# EUROPEAN PATENT APPLICATION

(11) **EP 3 860 051 A2**
(43) Date of publication of application: **04.08.2021**
(21) Application number: 21165953.7
(22) Date of filing: 30.03.2021
(51) Int. Cl.: H04L 12/24

(54) **METHOD, APPARATUS, ELECTRONIC DEVICE, READABLE STORAGE MEDIUM AND PROGRAM FOR DETERMINING ROBUSTNESS**

(30) Priority: 14.07.2020 CN 202010674467
(71) Applicant: BEIJING BAIDU NETCOM SCIENCE AND TECHNOLOGY CO. LTD., 100085 Beijing (CN)
(72) Inventor: WANG, Zeyu, Beijing, 100085 (CN)
(74) Representative: Lucke, Andreas

(57) **Abstract**

The present disclosure disclosures a method, an apparatus, an electronic device and a computer readable storage medium for determining robustness, and relates to the technical fields of cloud service/platform architecture evaluation and automatic evaluation. A specific embodiment of the method includes: acquiring host operation data and topology relationship data of a to-be-tested service architecture; analyzing robustness of the to-be-tested service architecture according to the host operation data and topology relationship data to obtain a robustness analysis result; determining an actual robust degree of the to-be-tested service architecture according to the robustness analysis result. The embodiment of the present disclosure provides an automatically executable robustness evaluation method of a service architecture through the above technical solution, which comprehensively covers various aspects for evaluating robustness according to host operation data of a single host and topology relationship data based on service operation conditions respectively deployed on different hosts, and is more efficient, more comprehensive and accurate than a conventional manual robustness determining method.

## Description

### TECHNICAL FIELD

The present disclosure relates to the technical field of service architecture evaluation, in particular, to the technical fields of cloud service/platform architecture evaluation and automatic evaluation, and more in particular to a method, an apparatus, an electronic device, a computer readable storage medium and program for determining robustness.

### BACKGROUND

With the development of the Internet industry, the architectures of the customer system services become more and more complex, and generally are formed from multiple modules or components. In the cloud era, the majority of companies' architectures is built on the cloud, so different deployment solutions are proposed based on the cloud itself and thus the architectures become complex and the deployment ways are various. Accordingly, the IT operation and maintenance personnel of the enterprise shall pay a close attention to the issues as to: whether the deployment architecture of the system services of the enterprise itself has high availability, whether there are performance bottlenecks, whether the cost is wasted, and whether the security risks exist. Therefore, it is desirable to evaluate the robustness of a service architecture, which is also a common problem.

According to the conventional technique, the robustness of a to-be-tested service architecture is generally determined by collecting data manually and then combining personal subjective experience.

### SUMMARY

Embodiments of the present disclosure provide a method, an apparatus, an electronic device and a computer readable storage medium for determining robustness.

In a first aspect, an embodiment of the present disclosure provides a method for determining robustness. The method includes: acquiring host operation data and topology relationship data of a to-be-tested service architecture; analyzing robustness of the to-be-tested service architecture according to the host operation data and the topology relationship data to obtain a robustness analysis result; and determining an actual robustness degree of the to-be-tested service architecture according to the robustness analysis result.

In a second aspect, an embodiment of the present disclosure provides an apparatus for determining robustness. The apparatus includes: a data acquisition unit, configured to acquire host operation data and topology relationship data of a to-be-tested service architecture; a robustness analysis unit, configured to analyze robustness of the to-be-tested service architecture according to the host operation data and the topology relationship data to obtain a robustness analysis result; an actual robustness degree determining unit, configured to determine an actual robustness degree of the to-be-tested service architecture according to the robustness analysis result.

In a third aspect, an embodiment of the present disclosure provides an electronic device. The electronic device includes: at least one processor; and a memory communicating with the at least one processor. The memory stores instructions that may be executed by the at least one processor, and the instructions, when executed by the at least one processor, cause the at least one processor to implement the method for determining robustness as described in any one of the implementations in the first aspect.

In a fourth aspect, an embodiment of the present disclosure provides a non-transitory computer readable storage medium on which computer instructions are stored, and the computer instruction cause a computer to implement the method for determining robustness as described in any one of the implementations in the first aspect.

According to the method, the apparatus, the electronic device and the computer readable storage medium for determining robustness provided in the embodiments of the present disclosure, the host operation data and the topology relationship data of the to-be-tested service architecture are first acquired; then, the robustness of the to-be-tested service architecture is analyzed according to the host operation data and the topology relationship data to obtain the robustness analysis result; and finally, the actual robustness degree of the to-be-tested service architecture is determined according to the robustness analysis result. The embodiments of the present disclosure provide an automatically executable robustness evaluation method of a service architecture through the above technical solutions, which comprehensively covers various aspects for evaluating robustness according to host operation data of a single host and topology relationship data based on service operation conditions respectively deployed on different hosts, and is more efficient, more comprehensive and accurate than a conventional manual robustness determining method.

It should be appreciated that the content described in this part is not intended to identify the key or critical features of the embodiments of the present disclosure, nor is it intended to limit the scope of the present disclosure. The other features of the present disclosure will become easy to understand through the following description.

### BRIEF DESCRIPTION OF THE DRAWINGS

After reading detailed descriptions of non-limiting embodiments with reference to the following accompanying drawings, other features, objectives and advantages of the present disclosure will be more apparent:
Fig. 1 is an example system architecture diagram in which the present disclosure may be applied;
Fig. 2 is a flowchart of a method for determining robustness provided by an embodiment of the present disclosure;
Fig. 3 is a flowchart of another method for determining robustness provided by an embodiment of the present disclosure;
Fig. 4 is a flowchart of a method for executing availability, security, performance, and cost analysis of methods provided by embodiments of the present disclosure;
Fig. 5 is a schematic diagram of a system architecture of the method for determining robustness provided by an embodiment of the present disclosure;
Fig. 6 is an architectural block diagram of a device for determining robustness provided by an embodiment of the present disclosure; and
Fig. 7 is a schematic diagram of an electronic device suitable for executing the method for determining robustness provided by an embodiment of the present disclosure.

### DETAILED DESCRIPTION OF EMBODIMENTS

The present disclosure will be described below in detail with reference to the accompanying drawings and in combination with the embodiments. It should be appreciated that the specific embodiments described herein are merely used for explaining the present disclosure, rather than limiting the disclosure. In addition, it should also be noted that, for ease of description, only parts related to the present disclosure are shown in the accompanying drawings.

It should also be noted that the embodiments in the present disclosure and the features in the embodiments may be combined with each other on a non-conflict basis. The present disclosure will be described below in detail with reference to the accompanying drawings and in combination with the embodiments.

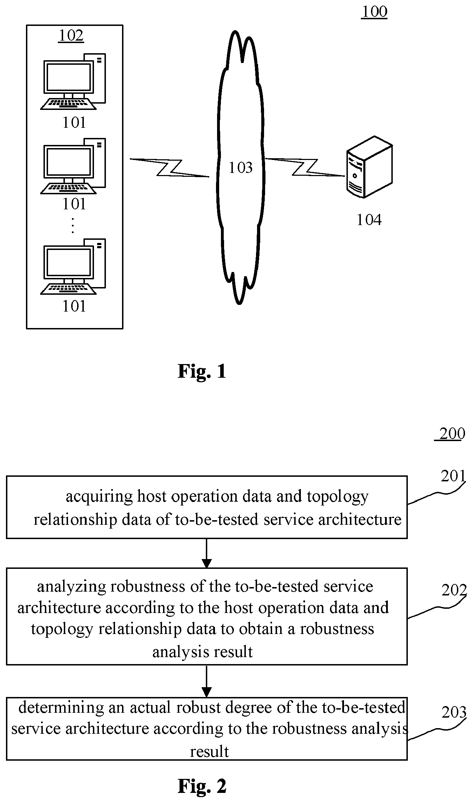

Fig. 1 shows an example system architecture 100 of an embodiment in which a method, an apparatus, an electronic device and a computer readable storage medium for determining robustness of the present disclosure may be applied.

AS shown in Fig. 1, the system architecture 100 may include: a service architecture 102 composed of at least two hosts 101, a network 103 and a server 104. The network 103 serves a communication medium for forming a communication link between the service architecture 102 and the server 104. The network 103 may include various types of connections, such as wired or wireless communication links, or optical fiber cables.

A user may use any of the hosts 101 constituting the service architecture 102 to interact with the server 104 through the network 103 to receive or send such as messages. Each of the hosts 101 and the server 104 in the service architecture 102 may be provided with various applications for implementing information communication therebetween, such as parameter acquisition and transmission applications, robustness evaluation applications, and instant messaging applications.

The at least two hosts 101 constituting the service architecture 102 may be hardware or software. When the at least two hosts 101 constituting the service architecture 102 are hardware, the hosts 101 may be various electronic devices including, but not limited to, smart phones, tablet computers, laptop computers, and desktop computers, and in this case, the service architecture 102 corresponds to a plurality of hardware clusters built up by the hardware; when the hosts 101 are software, the hosts 101 may be installed in the above electronic devices, and may be implemented as a plurality of software pieces or software modules, or may be implemented as a single software piece or software module, which is not specifically limited herein.

The server 104 may provide various services through various built-in applications, such as a robustness evaluation application that may provide the robustness evaluation service of a service architecture. When the server 104 runs the robustness evaluation application, the server 104 may achieve the following effect: acquiring first the host operation data and the topology relationship data from the service architecture 102 through the network 104; then, analyzing the robustness of the service architecture 102 according the host operation data and the topology relationship data to obtain the robustness analysis result; and finally, determining the actual robustness degree of the service architecture 102 according to the robustness analysis result. That is, the server 104 completes the automatic determination and evaluation of the robustness of the to-be-tested service architecture through the automatic execution of the above processing steps.

It should be noted that the host operation data and the topology relationship data of the to-be-tested service architecture 102 may be acquired in real time from the at least two hosts 101 constituting the service architecture 102 through the network 103, but may also be pre-stored locally on the server 104 in various ways. When the server 104 may detect the data locally (such as the robustness evaluation task of the service architecture remaining before the start of the processing), the server 104 may choose to acquire the data directly locally to accelerate the overall processing efficiency. In this case, the exemplary system architecture 100 may also not include the to-be-tested service architecture 102 and the network 103.

Since the robustness of the service architecture covers a plurality of aspects, the host operation data and the topology relationship data need to be processed in a large amount and in a deep way, and therefore more operation resources and more operation capabilities need to be occupied, and thus the method for determining robustness provided in the subsequent embodiments of the present disclosure is generally executed by the server 104 having more operation capabilities and more operation resources, and correspondingly, the apparatus for determining robustness is also generally provided in the server 104. However, it should be noted that when the service architecture 102 also has operation capabilities and operation resources that satisfy the requirement, the above operations that should be executed by the server 104 may be executed by a robustness evaluation application installed on a host 101 of the service architecture 102, and the same result as that of the server 104 may be output. Correspondingly, the apparatus for determining robustness may also be provided in any one of the hosts 101 of the service architecture 102. In this case, the example system architecture 100 may also not include the server 104 and the network 103.

It should be appreciated that the numbers of the hosts, the service architecture, the network and the server in Fig. 1 are merely illustrative. Any number of hosts, service architectures, networks and servers may be provided based on actual requirements.

Further referring to Fig. 2, Fig. 2 is a flowchart of a method for determining robustness provided by an embodiment of the present disclosure, where the implementation flow includes the following steps.

Step 201 includes acquiring host operation data and topology relationship data of a to-be-tested service architecture.

This step is intended to acquire the host operation data and the topology relationship data of the to-be-tested service architecture (such as the service architecture 102 shown in Fig. 1) from an execution body of the method for determining robustness (such as the server 104 shown in Fig. 1). The host operation data is used to reflect such as various resource usage (such as CPUs and memories) of a host and network connection to and from the host (i.e., which other hosts the host has network connection to). The topology relationship data is formed by aggregating the network connection information and the software deployment information among different hosts according to certain rules (such as the process names, the host names, and the sources and destinations of the network connection). The topology relationship data may be used to know such as the establishment of the connection relationship between different hosts (which may be referred to as communication topology information for short), the deployment of software programs of the same type, and the deployment of a service on each host (which may be referred to as deployment topology information for short).

A topology in the field of computer networks generally refers to a topology structure, in which a computer and a communication device in a network are abstracted as a point, and a transmission medium is abstracted as a line. A geometry composed of points and lines is a topology structure of a computer network. The topology structure of the network reflects the structural relationship of the entities in the network, is the first step in the construction of the computer network, and is the basis for implementing various network protocols. It has great influence on the performance of the network, the reliability of the system and the communication cost. The topology relationship data refers to the correlation data among the devices that establish the topology structure.

The host operation data may be acquired from each host of the to-be-tested service structure, that is, the host operation data of each host directly reflects the operation conditions of each host, and the topology relationship data may be extracted and stripped from the basic host operation data in a certain way, for example, which data belongs to the correlation data according to such as the same application process and the same service instance in the host operation data of different hosts, and is stripped into the topology relationship data. It is also possible to acquire the information directly and pertinently by some special ways, such as by a call chain technology similar to that in the micro-service field, and known or pre-defined partial topology information, which is not specifically limited herein, so long as the information indicating the establishment of the connection relationship among different hosts, the deployment of the same type of software programs, and the deployment of a service on each host may be acquired.

Further, the acquisition of the host operation data may be acquired in a plurality of ways, such as installing a operation data acquisition plug-in, a probe, and a data collection client on each host of the to-be-tested service architecture, and the installation methods also include a direct installation, a delivery installation (such as a direct delivery of the installation package by the host computer), assisting a user to install by using a web page redirection technology, and the like. Since the collection and acquisition of the host operation data continue with the continuous operation of the host, when a large number of hosts exist in the to-be-tested service architecture, in order to prevent data congestion and confusion caused by simultaneous upload of the host operation data by a plurality of hosts, the problem may also be solved by multithreading technology (such as creating a plurality of host operation data receiving queues) or message queues for forwarding and temporary storage.

Step 202 includes analyzing robustness of the to-be-tested service architecture according to the host operation data and the topology relationship data to obtain a robustness analysis result.

On the basis of the step 201, this step is intended to analyze the robustness of the to-be-tested service architecture by the execution body according to the host operation data and the topology relationship data to obtain the robustness analysis result.

The robustness is also referred to as Robust, which is used to indicate the capabilities of a system or a constructed architecture to survive in exceptional and dangerous situations. For example, the degree to which the computer software is capable of not freezing, not crashing, or maintaining operation in the cases of input errors, disk failures, network overload, or intentional attacks. In short, the robustness also refers to the property of a control system that maintains certain other properties under certain (structural, size) parameter perturbations. Modern networks are becoming increasingly complex, and more parameters are added to the robustness evaluation process together, for example, the robustness analysis result may be obtained by evaluating the availability, the security, the performance, the cost, and the other relevant aspects of the to-be-tested service architecture, and then synthesizing the evaluation results of each aspect.

Step 203 include determining an actual robustness degree of the to-be-tested service architecture according to the robustness analysis result.

On the basis of the step 202, this step is intended to determine the actual robustness degree of the to-be-tested service architecture by the execution body according to the obtained robustness analysis result. Different from the robustness analysis result, the actual robustness degree provides visualization degree, which is used to intuitively and quickly feed the robustness the to-be-tested service architecture back to the user, and may be expressed in the ways including, but not limited to, a graph, a score, and a schematic diagram. For example, when the highest robustness degree is expressed in a percentage system, the actual robustness degree may be scored as 67 because it is determined that a service in the to-be-tested service architecture does not have high availability in the robustness analysis result.

Further, after the actual robustness degree is obtained, in order to help the user to formulate adjustment measures for the weakness existing in the service architecture of the user in time and accuracy, the corresponding robustness evaluation and adjustment solution may also be generated according to the actual robustness degree.

According to the method for determining robustness provided in the embodiment of the present application, the above technical solution provides an automatically executable robustness evaluation method of a service architecture, which comprehensively covers various aspects for evaluating robustness according to host operation data of a single host and topology relationship data based on service operation conditions respectively deployed on different hosts, and is more efficient, more comprehensive and accurate than a conventional manual determining method.

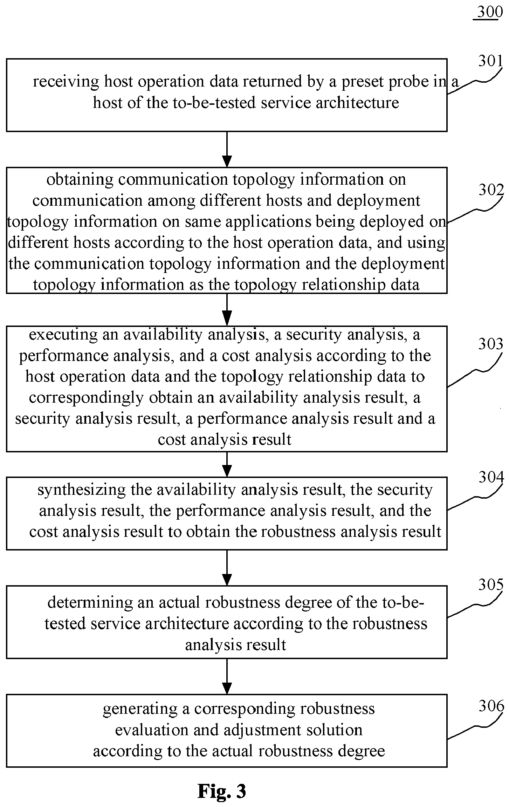

On the basis of the above embodiment, this embodiment also provides a flowchart of another method for determining robustness through Fig. 3, the flowchart 300 of which includes the following steps.

Step 301 includes receiving host operation data returned by a preset probe in a host of a to-be-tested service architecture.

This step is intended to acquire the host operation data by receiving the data collected by the preset probe in the host by the execution body. In addition to using the probe, such as a plug-in and a host client may also be used. Compared with the plug-in and the host client, the probe is lighter and has less influence on the host operation.

Further, in order to prevent data congestion and confusion caused by returning the host operation data to the execution body at the same time by a plurality of hosts, the host operation data returned respectively by a preset probe in each host in the to-be-tested service architecture may be received through a preset message queue, that is, the probe of each host may send the host operation data to the message queue by setting the message queue, so that the stored data in each host may be temporarily stored in the form of a queue by the message queue, thereby enabling the host operation data of each host to be presented to the execution body one by one, thereby eliminating data congestion and confusion problems.

Step 302 includes obtaining communication topology information on communication among different hosts and deployment topology information on same applications being deployed on different hosts according to the host operation data, and using the communication topology information and the deployment topology information as the topology relationship data.

This step is intended to specifically acquire the topology relationship data composed of the communication topology information and the deployment topology information by the execution body, which is more comprehensive from two angels. The communication topology information is obtained according to the communication relationship in the host operation data among different hosts, and the deployment topology information is obtained according to the deployment situation of the same applications in the host operation data on different hosts.

The communication topology information indicating the inherent communication relationship among hosts is relatively easy to obtain, and a method that includes, but is not limited to, obtaining communication topology information, includes the followings steps:
extracting application features of each application including a process name, an occupied port, and a deployment path from the host operation data; and
marking hosts having application features, a consistency degree of which exceeds a preset degree, as target hosts, and obtaining the deployment topology information of the applications deployed on each of the target hosts. The preset degree may be flexibly set according to a requirement of a consistency degree in a practical situation, such as a strong consistency of 95%, and a weak consistency of 65%. Having the same application features generally indicates that the same applications are installed on different hosts, and the applications run respectively or cooperate with each other through a network, and the application features specifically select representative parameters such as a process name, an occupied port, and a deployment path.

Step 303 includes executing an availability analysis, a security analysis, a performance analysis, and a cost analysis according to the host operation data and the topology relationship data to correspondingly obtain an availability analysis result, a security analysis result, a performance analysis result and a cost analysis result.

Different from the step 202 in the flowchart 200, this step is intended to analyze the to-be-tested service architecture by the execution body from the four aspects of the availability, the security, the performance, and the cost, respectively, based on the host operation data and the topology relationship data to obtain the corresponding analysis results.

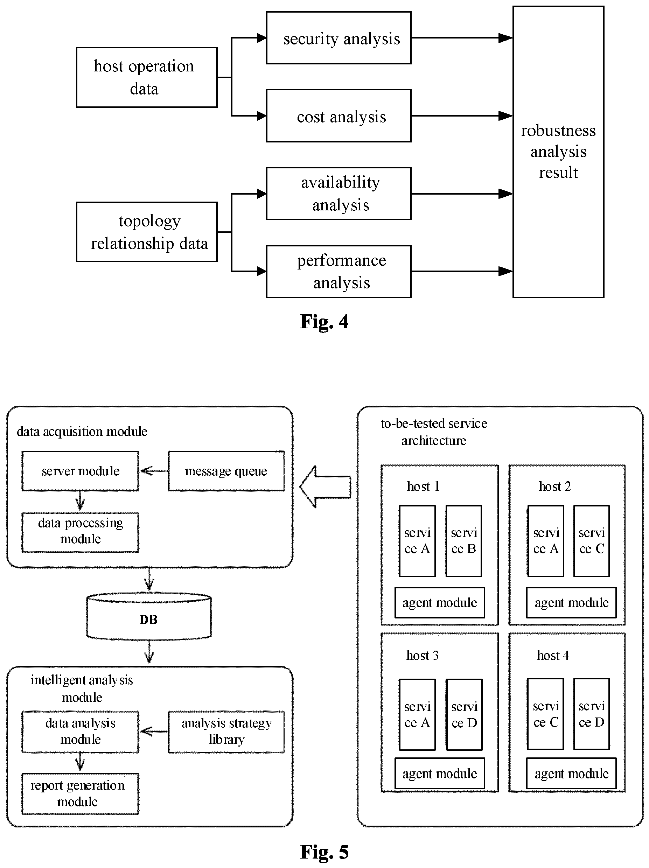

For ease of understanding, an example of how to specifically analyze the availability, the security, the performance, and the cost, respectively, is provided as follows. The data type based on and the corresponding analysis type may be seen in the schematic diagram shown in Fig. 4.

The availability analysis includes: determining the host information where the target service is deployed according to the topology relationship data; and outputting, in response to the host information indicating there are at least two hosts which do not cross region or cross network segments, an availability analysis result that the to-be-tested service architecture does not have high availability. That is, the acquired topology relationship data are used to determine the hosts in which the instances of a service are specifically deployed, and then according to the region and network segment information in the host information, it may be determined whether the deployment of the service meets the requirements of cross-regions and cross-network segments. If it is found that all instances of the service are deployed in the same region or in the same network segment, it may be determined that the service does not have high availability, and the deployment needs to be adjusted to meet the deployment conditions of the cross-regions or cross-network segment.

The security analysis includes: determining, based on the host operation data, the IP address sets of other hosts to communicate with each other; and outputting, in response to the unidentified IP address being contained in the IP address sets, a security analysis result that the to-be-tested service architecture has potential security threats. That is, according to the incoming/outgoing network connection of the host included in the host operation data, it is known what the IP addresses of other hosts connected with the host are within a period of time. If an unknown IP address is found (that is, an external IP address other than the client itself or the well-known external IP address), it may be determined that the host may have a certain security risk of connection from an unknown source, and further troubleshooting and judgment are required.

The performance analysis includes: determining the resource usage of different hosts deployed with the same service instances according to the topology relationship data; and outputting, in response to there being an abnormal performance host whose resource usage is lower than the average value of resource usage, a performance analysis result that the to-be-tested service architecture has an abnormal performance host. The average value of the resource usage is acquired by averaging the resource usage of each host deployed with the same service instance. That is, according to the acquired topology relationship data, it is possible to know which hosts the instances of a service are specifically deployed in, and then, according to the resource usage information (such as CPUs and memories) in the host information, it is possible to determine the resource usage of the hosts deployed with all instances of the service. If the resource usage of some instances is far lower than or far higher than the average value of other instances, it is possible to determine that there is a problem in the performance of the instances, and some load balancing adjustment or program optimization is required.

The cost analysis includes: determining the number of business processes in each host according to the host operation data; and outputting, in response to there being an idle host in which the number of business processes is lower than a preset number, a cost analysis result that the to-be-tested service architecture has an idle host. That is, according to the host operation data including the process information and the resource usage information, the usage of the host is known. If it is found that the resource usage is very low, and no client process is available (that is, the process is all a system default process), it may be determined that the host is not used, and there is a certain waste, and the release is required to save costs.

Step 304 includes synthesizing the availability analysis result, the security analysis result, the performance analysis result, and the cost analysis result to obtain the robustness analysis result.

This step is intended to obtain the robustness analysis result by synthesizing the analysis results of the four aspects by the execution body including, but not limited to, weighting, accumulation, and enumeration.

Step 305 includes determining an actual robustness degree of the to-be-tested service architecture according to the robustness analysis result.

Step 306 includes generating a corresponding robustness evaluation and adjustment solution according to the actual robustness degree.

On the basis of all the advantages of the above embodiment, this embodiment provides a specific solution for acquiring the host operation data and the topology relationship data through the steps 301-302, thereby improving the feasibility of the solution; and a solution for executing the robustness analysis from four aspects is provided by the steps 303-304, which covers various aspects indicating the robustness, so that the synthesized robustness analysis result is more comprehensive and accurate.

For further understanding, the present disclosure also provides a specific implementation solution in combination with a specific application scenario. For details, refer to the structural schematic diagram shown in Fig. 5.

As shown in Fig. 5, the to-be-tested service architecture on the right side is specifically composed of four hosts, each of which is pre-deployed with an Agent (client) for acquiring data, the host 1 is deployed with a service A and a service B, the host 2 is deployed with a service A and a service C, the host 3 is deployed with a service A and a service D, and the host 4 is deployed with a service C and a service D. The left side specifically divides the function of the robustness evaluation server into two parts, a data acquisition system and an intelligent analysis system. The data acquisition system and the intelligent analysis system are connected through a DB (Data Base).

The data acquisition system inherits and stores data acquired from each host agent module through a message queue, and the message queue sequentially sends the received data to the server module, and sends the received data to the data processing module through the server module for processing to acquire host operation data and topology relationship data. The data processing module stores the processed host operation data and the topology relationship data in the DB.

The intelligent analysis system pulls the required data from the DB, evaluates the robustness of the to-be-tested service architecture indicated by the data by the data analysis module under the guidance of the preset analysis strategy library, and finally submits the evaluation result to the report generation module to generate a robustness evaluation report.

For the above specific structure, the actual robustness evaluation process may be described as:
when the intelligent analysis module executes the availability analysis, it is found that the service B is deployed only on the host 1 in the four hosts of the to-be-tested service architecture. Therefore, when the host 1 fails, the service B may not run normally due to a single point of failure, and the service C as the subsequent service of the service B may not be executed either. At the same time, it is also found that the host 2 and the host 4, both of which are deployed with the service C, are in the same network segment and do not have high availability. Therefore, the availability analysis result that the service B has a single point of failure and the service C does not have high availability is obtained;
when the intelligent analysis module executes the security analysis, it is found that none of the four hosts of the to-be-tested service architecture has communicated with a host with a non-known IP address. Therefore, the security analysis result that is flexible in security is obtained;
when the intelligent analysis module executes the cost analysis, it is found that the service D on the host 3 is in an idle state for a long time, which is obviously different from the operation state of the service D on the host 4. However, the operation of the service D is not affected as a whole. Therefore, after combining the operation requirements of the service D and the operation environment of the host 4, the cost analysis result in which the host 3 has more idle resources is obtained;
when the intelligent analysis module executes the performance analysis, it is found that the operation resources occupied by the service instances of the service A and the service C of the to-be-tested service architecture on the host 1 and the host 4 are basically the same. Therefore, the performance analysis result with normal performance is obtained.

The intelligent analysis module synthesizes the above four analysis results in the report generation module, and finally obtains the following contents: the service B has a single point of failure, and the service C does not have high availability. It is recommended to deploy the service B to the hosts 2, 3 or 4, and adjust and deploy the host 2 and the host 4 in different network segments. The present host 3 is replaced by the host 5 that is less expensive and has less operation resources.

Through the above steps, the overall evaluation of the service architecture may be realized. With this solution, the evaluation results of the availability, the performance, the security, and the cost of the architecture may be accurately obtained at low cost, so as to guide the customer to further adjust and optimize the service architecture, improve the overall architecture capability, and avoid damage to the enterprise business due to unrobustness of the architecture.

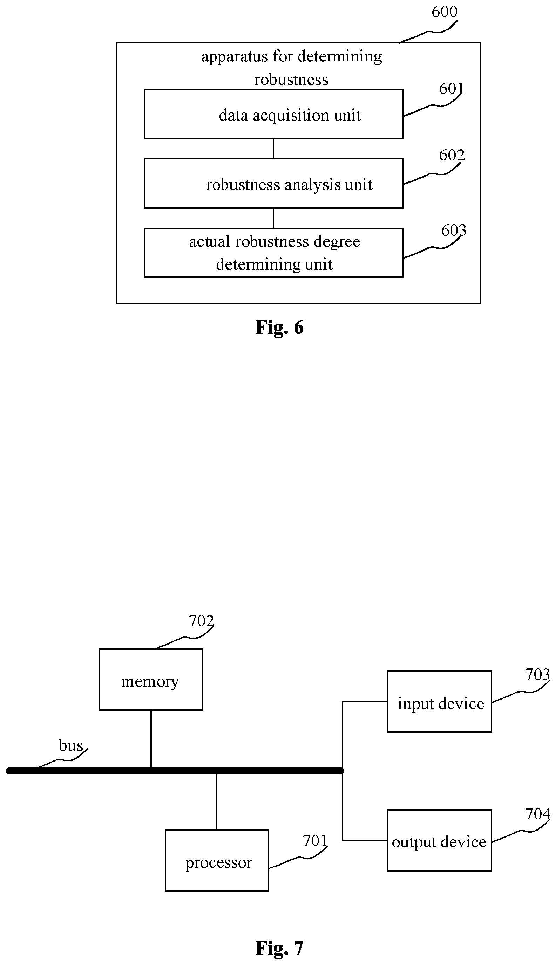

Further referring to Fig. 6 as an implementation of the method shown in each of the above figures, the present disclosure provides an embodiment of an apparatus for determining robustness, which corresponds to the embodiment of the method shown in Fig. 2, and which may be specifically applied in various electronic devices.

As shown in Fig. 6, the apparatus 600 for determining robustness in this embodiment may include a data acquisition unit 601, a robustness analysis unit 602, and an actual robustness degree determining unit 603. The data acquiring unit 601 is configured to acquire host operation data and topology relationship data of the to-be-tested service architecture. The robustness analysis unit 602 is configured to analyze the robustness of the to-be-tested service architecture according to the host operation data and the topology relationship data to obtain a robustness analysis result. The actual robustness degree determining unit 603 is configured to determine the actual robustness degree of the to-be-tested service architecture based on the robustness analysis result.

In this embodiment, the specific processing of the data acquisition unit 601, the robustness analysis unit 602, and the actual robustness degree determining unit 603 and the technical effects thereof may be described with reference to the related description of the steps 201-203 in the corresponding embodiment in Fig. 2, and details are not described herein.

In some alternative implementations of this embodiment, the data acquisition unit 601 may include: a host operation data acquisition subunit, configured to receive the host operation data returned by the probe preset in the host of the to-be-tested service architecture; a topology relationship data acquisition subunit, configured to obtain communication topology information on communication among different hosts and deployment topology information on same applications being deployed on different hosts according to the host operation data, and use the communication topology information and the deployment topology information as the topology relationship data.

In some alternative implementations of this embodiment, the host operation data acquisition subunit may be further configured to receive the host operation data returned by the preset probe in each host of the to-be-tested service architecture through a preset message queue.

In some alternative implementations of this embodiment, the topology relationship data acquisition subunit may include a deployment topology information acquisition module, and the deployment topology information acquisition module is configured to: extract application features of each application including a process name, an occupied port, and a deployment path from the host operation data; and mark hosts having application features, a consistency degree of which exceeds a preset degree, as target hosts, and obtain the deployment topology information of the applications deployed on each of the target hosts.

In some alternative implementations of this embodiment, the robustness analysis unit 602 may include a four-angle analysis subunit, configured to execute the availability analysis, the security analysis, the performance analysis, and the cost analysis according to the host operation data and the topology relationship data, and correspondingly obtain the availability analysis result, the security analysis result, the performance analysis result, and the cost analysis result; a synthesized analysis subunit, configured to synthesize the availability analysis result, the security analysis result, the performance analysis result, and the cost analysis result to obtain a robustness analysis result.

In some alternative implementations of this embodiment, the four-angle analysis subunit may include an availability analysis module that may be configured to: determine the host information where the target service is deployed according to the topology relationship data; and output, in response to the host information indicating there are at least two hosts which do not cross regions or cross network segments, an availability analysis result that the to-be-tested service architecture does not have high availability.

In some alternative implementations of this embodiment, the four-angle analysis subunit may include a security analysis module that may be configured to: determine, based on the host operation data, the IP address sets of other hosts to communicate with each other; and output, in response to the unidentified IP address being contained in the IP address sets, a security analysis result that the to-be-tested service architecture has potential security threats.

In some alternative implementations of this embodiment, the four-angle analysis subunit may include a performance analysis module that may be configured to: determine the resource usage of different hosts deployed with the same service instances according to the topology relationship data; and output, in response to there being an abnormal performance host whose resource usage is lower than the average value of resource usage, a performance analysis result that the to-be-tested service architecture has an abnormal performance host, where the average value of the resource usage is acquired by averaging the resource usage of each host deployed with the same service instance.

In some alternative implementations of this embodiment, the four-angle analysis subunit may include a cost analysis module that may be configured to: determine the number of business processes in each host according to the host operation data; and output, in response to there being an idle host in which the number of business processes is lower than a preset number, a cost analysis result that the to-be-tested service architecture has an idle host.

In some alternative implementations of this embodiment, the apparatus 600 for determining robustness may further include a robustness evaluation and adjustment solution generation unit, configured to generate a corresponding robustness evaluation and adjustment solution according to the actual robustness degree.

This embodiment exists as an embodiment of the apparatus corresponding to the above embodiment of the method. The apparatus for determining robustness provided in this embodiment provides an automatically executable robustness evaluation method of a service architecture through the above technical solution, which comprehensively covers various aspects for evaluating robustness according to host operation data of a single host and topology relationship data based on service operation conditions respectively deployed on different hosts, and is more efficient, more comprehensive and accurate than a conventional manual robustness determining method.

According to the embodiments of the present disclosure, the present disclosure also provides an electronic device and a computer readable storage medium.

Fig. 7 shows a schematic diagram of an electronic device suitable for executing a method for determining robustness of an embodiment of the present disclosure. Electronic devices are intended to represent various forms of digital computers, such as laptops, desktops, worktables, personal digital assistants, servers, blade servers, mainframe computers and other suitable computers. Electronic devices may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 7, the electronic device includes one or more processors 701, a memory 702, and interfaces for connecting components, including high-speed interfaces and low-speed interfaces. The components are interconnected by using different buses and may be mounted on a common motherboard or otherwise as required. The processor may process instructions executed within the electronic device, including instructions stored in memory or on memory to display graphical information of the GUI on an external input/output device (such as a display device coupled to an interface). In other embodiments, a plurality of processors and/or a plurality of buses and a plurality of memories may be used with a plurality of memories, if required. Similarly, a plurality of electronic devices may be connected, each of which provides some of the necessary operations (such as a server array, a set of blade servers, or a multiprocessor system). An example of a processor 701 is shown in Fig. 7.

The memory 702 is the non-transitory computer readable storage medium provided in the present disclosure. The memory stores instructions that may be executed by at least one processor to cause the at least one processor to execute the method for determining robustness provided in the present disclosure. The non-transitory computer readable storage medium of the present disclosure stores computer instructions that may cause a computer to execute the method for determining robustness provided in the present disclosure.

As a non-transitory computer readable storage medium, the memory 702 may be used to store non-transitory software programs, non-transitory computer executable programs and modules, such as the program instructions/modules corresponding to the method for determining robustness of the embodiment of the present disclosure (such as the data acquisition unit 601, the robustness analysis unit 602, and the actual robustness degree determining unit 603 shown in Fig. 6). The processor 701 runs the non-transitory software programs, instructions and modules stored in the memory 702 to execute various functional applications and data processing of the server, thereby implementing the method for determining robustness of the above method embodiment.

The memory 702 may include a storage program area and a storage data area, where the storage program area may store an operating system and an application program required by at least one function; and the storage data area may store such as data created by the use of the electronic device according to the method for determining robustness. In addition, the memory 702 may include a high-speed random access memory, and may also include a non-transitory memory, such as at least one magnetic disk storage device, a flash memory or other non-transitory solid state storage devices. In some embodiments, the memory 702 may optionally include a memory disposed remotely relative to processor 701, which may be connected through a network to the electronic device of the method for determining robustness. Examples of such networks include, but are not limited to, the Internet, enterprise intranets, local area networks, mobile communication networks and combinations thereof.

The electronic device suitable for executing the method for determining robustness may further include an input device 703 and an output device 704. The processor 701, the memory 702, the input device 703 and the output device 704 may be connected through a bus or other ways, and an example of the connection through a bus is shown in Fig. 7.

The input device 703 may receive the input number or character information, and generate the input key signal related to the user settings and the functional control of the electronic device suitable for executing the method for determining robustness, such as a touch screen, a keypad, a mouse, a track pad, a touch pad, a pointer bar, one or more mouse buttons, a trackball, a joystick. The output device 704 may include such as a display device, an auxiliary lighting device (such as an LED), a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein maybe implemented in digital electronic circuit systems, integrated circuit systems, ASICs (application specific integrated circuits), computer hardware, firmware, software and/or combinations thereof. These various embodiments may include: being implemented in one or more computer programs, where the one or more computer programs may be executed and/or interpreted on a programmable system including at least one programmable processor, and the programmable processor maybe a dedicated or general purpose programmable processor, which may receive data and instructions from a memory system, at least one input device and at least one output device, and send the data and instructions to the memory system, the at least one input device and the at least one output device.

These computing programs (also referred to as programs, software, software applications or code) include machine instructions of a programmable processor and may be implemented in high-level procedures and/or object-oriented programming languages, and/or assembly/machine languages. As used herein, the terms "machine readable medium" and "computer readable medium" refer to any computer program product, device and/or apparatus (such as magnetic disk, optical disk, memory, programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be executed on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback, or tactile feedback); and input from the user may be received in any form, including acoustic input, speech input, or tactile input.

The systems and technologies described herein may be executed in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component, or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other.

The embodiment of the present disclosure provides an automatically executable robustness evaluation method of a service architecture through the above technical solution, which comprehensively covers various aspects for evaluating robustness according to host operation data of a single host and topology relationship data based on service operation conditions respectively deployed on different hosts, and is more efficient, more comprehensive and accurate than a conventional manual robustness determining method.

It should be appreciated that the steps of reordering, adding or deleting may be executed using the various forms shown above. For example, the steps described in the present disclosure maybe executed in parallel or sequentially or in a different order, so long as the required results of the technical solutions disclosed in the present disclosure may be realized, and no limitation is imposed herein.

The above specific description is not intended to limit the scope of the present disclosure. It should be appreciated by those skilled in the art that various modifications, combinations, sub-combinations, and substitutions may be made depending on design requirements and other factors. Any modifications, equivalents, and modifications that fall within the spirit and principles of this disclosure are intended to be included within the scope of this disclosure.

## Claims

1. A method for determining robustness, the method comprising:
acquiring (201) host operation data and topology relationship data of a to-be-tested service architecture;
analyzing (202) robustness of the to-be-tested service architecture according to the host operation data and topology relationship data to obtain a robustness analysis result; and
determining (203) an actual robust degree of the to-be-tested service architecture according to the robustness analysis result.

2. The method according to claim 1, wherein the acquiring host operation data and topology relationship data of to-be-tested service architecture, comprises:
receiving (301) host operation data returned by a preset probe in a host of the to-be-tested service architecture; and
obtaining (302) communication topology information on communication among different hosts and deployment topology information on same applications being deployed on different hosts according to the host operation data, and using the communication topology information and the deployment topology information as the topology relationship data.

3. The method according to claim 2, wherein the receiving comprises:
receiving the host operation data respectively returned by the preset probe in each host of the to-be-tested service architecture through a preset message queue.

4. The method according to claim 2 or 3, wherein the obtaining comprises:
extracting application features of each application including a process name, an occupied port, and a deployment path from the host operation data; and
marking hosts having the application features, a consistency degree of which exceeds a preset degree, as target hosts, and obtaining deployment topology information of applications deployed on each of the target hosts.

5. The method according to any one of claims 1 to 4, wherein the analyzing comprises:
executing (303) an availability analysis, a security analysis, a performance analysis and a cost analysis according to the host operation data and the topology relationship data to correspondingly obtain an availability analysis result, a security analysis result, a performance analysis result and a cost analysis result; and
synthesizing (304) the availability analysis result, the security analysis result, the performance analysis result, and the cost analysis result to obtain the robustness analysis result.

6. The method according to claim 5, wherein the executing an availability analysis according to the topology relationship data to obtain an availability analysis result, comprises:
determining host information where a target service is deployed according to the topology relationship data; and
outputting, in response to the host information indicating there are at least two hosts which do not cross regions or cross network segments, an availability analysis result that the to-be-tested service architecture does not have high availability.

7. The method according to claim 5 or 6, wherein the executing a security analysis according to the host operation data to obtain a security analysis result, comprises:
determining, based on the host operation data, IP address sets of other hosts to communicate with each host; and
outputting, in response to an unidentified IP address being contained in the IP address sets, a security analysis result that the to-be-tested service architecture has potential security threats.

8. The method according to any one of claims 5 to 7, wherein the executing a performance analysis according to the topology relationship data to obtain a performance analysis result, comprises:
determining resource usage of different hosts deployed with same service instances according to the topology relationship data; and
outputting, in response to there being an abnormal performance host whose resource usage is lower than an average value of resource usage, a performance analysis result that the to-be-tested service architecture has the abnormal performance host, wherein the average value of resource usage is obtained by averaging resource usage of each host deployed with same service instances.

9. The method according to any one of claims 5 to 8, wherein the executing a cost analysis according to the host operation data to obtain a cost analysis result, comprises:
determining a number of business processes in each host according to the host operation data; and
outputting, in response to there being an idle host in which a number of business processes is lower than a preset number, a cost analysis result that the to-be-tested service architecture has the idle host.

10. The method according to any one of claims 1-9, the method further comprising:
generating (306) a corresponding robustness evaluation and adjustment solution according to the actual robustness degree.

11. An apparatus for determining robustness, comprising: units for performing the method according to any one of claims 1 to 10.

12. An electronic device, comprising:
at least one processors; and
a memory communicating with the at least one processor; wherein,
the memory stores instructions executable by the at least one processor, and the instructions, when executed by the at least one processor, cause the at least one processor to execute the method for determining robustness according to any one of claims 1-10.

13. A non-transitory computer readable storage medium storing computer instructions, wherein the computer instructions cause a computer to execute the method for determining robustness according to any one of claims 1-10.

14. A computer program comprising instructions which, when the program is executed by a computer, cause the computer to perform the method according to any one of claims 1 to 10.
